# EUROPÄISCHE PATENTANMELDUNG

(11) **EP 1 788 590 A1**
(43) Veröffentlichungstag der Anmeldung: **23.05.2007**
(21) Anmeldenummer: 05025120.6
(22) Anmeldetag: 17.11.2005
(51) Int. Cl.: H01F 7/06, H02K 33/04, G11B 7/09

(54) **Tauchspulensystem**

(71) Anmelder: SICK AG, 79183 Waldkirch (DE)
(72) Erfinder: Vetter, Thomas, 79189 Bad Krozingen (DE)
(74) Vertreter: Patentanwälte Westphal, Mussgnug & Partner

(57) **Zusammenfassung**

Die Erfindung betrifft ein Tauchspulensystem (10) mit einer in einem Erregersystem (30) beweglichen Spule (20) mit zwei Anschlüssen (21, 22), welche über Anschlussverbindungen mit einer Stromversorgung verbunden sind, wobei die Spule (20) mittels wenigstens einer ersten Membran (41) und einer zweiten Membran (42) gelagert ist, wobei die erste Membran (41) und die zweite Membran (42) elektrisch leitfähig und gegeneinander isoliert ausgebildet sind und zumindest einen Teil der elektrischen Anschlussverbindungen der Spule (20) bilden.

## Beschreibung

Die Erfindung betrifft ein Tauchspulensystem.

Bekannt sind Tauchspulensysteme bestehend im Wesentlichen aus einem Erregersystem und einer Tauchspule. Die Tauchspule ist dabei eine oft zylinderförmige Spule, die in einen schmalen, ringförmigen Luftspalt eines mit Gleichstrom oder durch einen Permanentmagneten erregten Magnetsystems eintaucht. Wird die Spule von einem Strom durchflossen, wirkt auf die Tauchspule ein Kraft, die diese, je nach Richtung des Stromes, in das Erregersystem hineinzuziehen oder herauszutreiben versucht. Die Kraft ist dabei direkt proportional zu dem durch die Spule fließenden Strom.

Derartige Tauchspulensysteme werden in der Mess- und Regeltechnik als wichtige Bausteine verwendet.

Ein weiterer bekannter Anwendungsfall einer Tauchspule besteht in einem dynamischen Mikrophon, bei welchem die Tauchspule mit einer Membran verbunden ist, welche durch Schallwellen in Schwingungen versetzt wird, so dass sich die Tauchspule im Magnetfeld mit einer bestimmten Geschwindigkeit bewegt. Durch die Bewegung der Tauchspule wird in der Spule eine Wechselspannung induziert, wodurch die Schallwellen in ein elektrisches Signal umgesetzt werden.

Weiterhin ist bekannt, Membranen auch zur Lagerung der Tauchspule gegenüber dem Erregersystem zu verwenden.

Ein Problem bei der Verwendung von Tauchspulen besteht darin, dass die Spule gegenüber dem Erregersystem bewegt wird und somit die Anschlussverbindungen zwischen Stromversorgung der Spule und den Anschlüssen für die Wicklung der Spule ständig Bewegungen unterliegt. Die Anschlussverbindungen ermüden daher oft und können brechen, was zu einem Totalausfall des Bauelements führt.

Die Aufgabe der Erfindung besteht daher darin, ein Tauchspulensystem bereitzustellen, bei welchem die Anschlussverbindungen für die Spule durch die Biegewechselbelastung bei Bewegung der Spule nicht beschädigt werden.

Die Aufgabe wird gelöst durch ein Tauchspulensystem mit den Merkmalen des Patentanspruchs 1.

Vorteilhafte Ausgestaltungen und Weiterbildungen der Erfindung sind in den Unteransprüchen angegeben.

Das erfindungsgemäße Tauchspulensystem ist dadurch ausgezeichnet, dass die Spule mittels wenigstens einer ersten und einer zweiten Membran gelagert ist, wobei die Membranen elektrisch leitfähig und gegeneinander isoliert ausgebildet sind und zumindest einen Teil der elektrischen Anschlussverbindungen der Spule bilden. Indem die ansonsten als Drähte ausgebildeten Anschlussverbindungen durch Membranen gebildet werden, sind die Anschlussverbindungen gegenüber den Biegewechselbelastungen, welche bei Bewegung der Spule in dem Erregersystem auftreten, unempfindlich. Bei einer Membran besteht auch nach vielen Bewegungszyklen keine Gefahr eines Ermüdungsbruchs. Die Membranen dienen somit einerseits zur Lagerung der Spule, andererseits kann über sie jedoch auch der elektrische Anschluss zwischen der Spule und einer Stromverbindung hergestellt werden, so dass die Anschlussverbindungen bei häufigen Biegewechselbelastungen nicht ermüden werden und eine größere Lebensdauer haben.

Vorzugsweise ist der erste Anschluss der Spule mit der ersten Membran und der zweite Anschluss der Spule mit der zweiten Membran verbunden, so dass die elektrische Isolierung der Anschlüsse gegeneinander gewährleistet ist.

Vorzugsweise werden die Membrane axial von einer Halterung für die Spule durchsetzt. Einerseits ist durch die symmetrische Anordnung der Halterung in den Membranen eine besonders günstige Lagerung der Halterung gewährleistet. Andererseits kann dadurch, dass die Halterung die Membrane durchsetzt, die Halterung dazu verwendet werden, dass Komponenten, die durch die Tauchspule in ihrer Position verstellt werden sollen, in der Halterung angeordnet werden können. Vorzugsweise ist dafür die Halterung aus einem Hohlrohr gebildet.

Besonders bevorzugt ist das Tauchspulensystem derart ausgebildet, dass es zur Halterung eines optischen Systems, insbesondere eines Objektivs verwendet werden kann. Insbesondere bei der Einstellung von Objektiven ist eine genaue Positionierung des Objektivs für eine entsprechende Fokussierung von hoher Bedeutung, wobei die Positionsgenauigkeit durch ein Tauchspulensystem besonders gut gewährleistet wird.

Besonders hohe Positionagenauigkeiten werden bei der Positionierung eines Objektivs in einem Laserscanner benötigt, so dass vorzugsweise das Tauchspulensystem zur Halterung eines derartigen Objektivs verwendet wird.

Die Erfindung wird anhand der nachfolgenden Figuren ausführlich erläutert. Es zeigt
- Fig. 1: eine perspektivische Ansicht eines Ausführungsbeispiels eines erfindungsgemäßen Tauchspulensystem,
- Fig. 2: eine Seitenansicht des Tauchspulensystems gemäß Figur 1 und
- Fig. 3: einen Axialschnitt gemäß der Linie E-E in Figur 2.

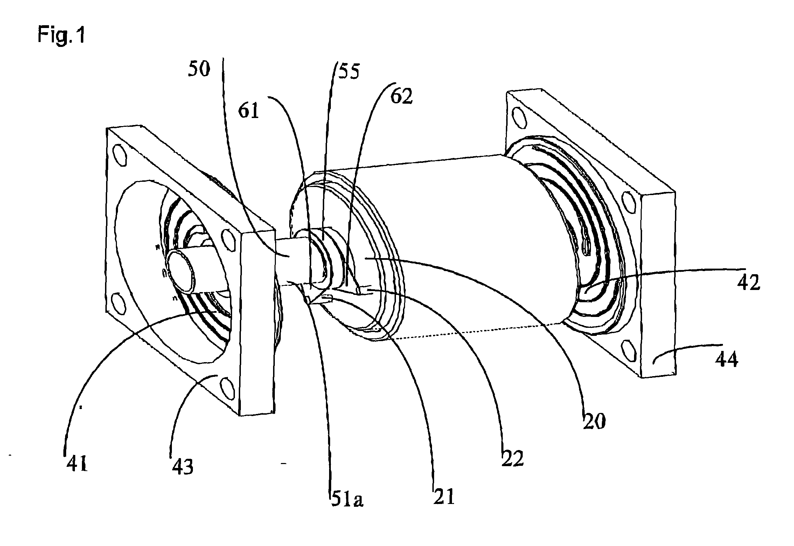

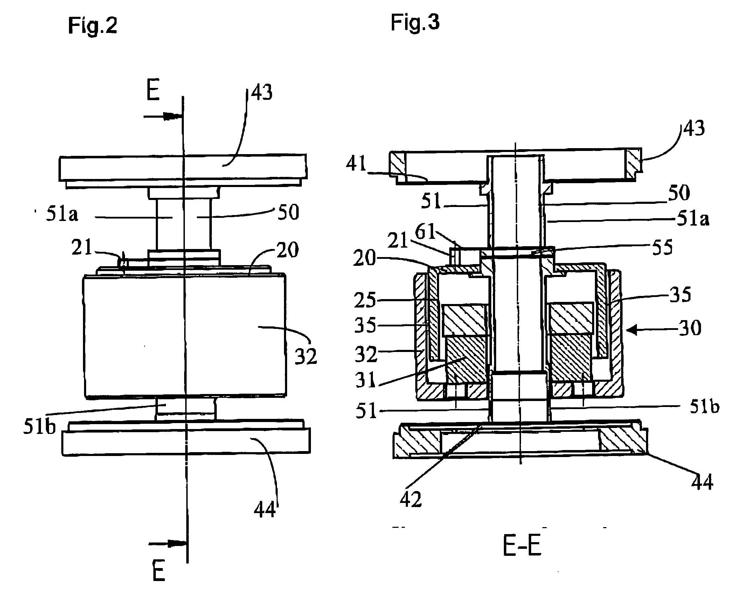

Figur 1 zeigt eine perspektivische Ansicht, Figur 2 eine Seitenansicht und Figur 3 einen Axialschnitt gemäß der Linie E-E in Figur 2 eines Tauchspulensystems 10 mit einer Spule 20, welche in einem Erregersystem 30 bewegbar ist. Gleiche Bezugsziffern in den Figuren bezeichnen gleiche Bauteile.

Die Spule 20 besteht aus einer im Wesentlichen zylindrischen Wicklung 25 mit einem ersten Anschluss 21 und einem zweiten Anschluss 22. Das Erregersystem 30 ist als Magnetsystem ausgebildet und weist einen Magneten 31 auf, der in einem Trägerelement 32 bestehend aus einem magnetischen Material, vorzugsweise aus Weicheisen, angeordnet ist. Der Magnet 31 kann entweder als Dauermagnet oder als Elektromagnet ausgebildet sein. Das Trägerelement 32 ist dabei so ausgebildet, dass es einen im Wesentlichen ringförmigen Luftspalt 35 bildet, in welchen die Wicklung 25 der Spule 20 eintaucht.

Die Spule 20 ist an einer Halterung 50 angeordnet, die im Wesentlichen aus einem Hohlrohr 51 besteht, welches die Spule 20 axial durchsetzt. Die freien Enden des Hohlrohres 51 sind dabei jeweils in einer ersten Membran 41 und einer zweiten Membran 42 angeordnet, welche wiederum in einer Membranhalterung 43, 44 gehalten werden. Vorzugsweise sind dabei die ersten Membran 41 und die zweite Membran 42 kreisringförmig ausgebildet, wobei das Hohlrohr 51 die Membran 41 axial durchsetzt und die Membranen 41, 42 an ihrem Außenumfang in den Membranhalterungen 43, 44 gehalten werden.

Sowohl die Membranhalterungen 43, 44 als auch das Erregersystem 30 sind ortsfest und in fester relativer Position zueinander in einem nicht dargestellten Gehäuse angeordnet.

Die Anschlussverbindungen zwischen dem ersten Anschluss 21 bzw. dem zweiten Anschluss 22 der Spule 20 und einer nicht dargestellten Stromversorgung ist in folgender Weise realisiert. Das Hohlrohr 51 wird durch eine Isolation 55 in einen ersten Abschnitt 51a und einen zweiten Abschnitt 51b geteilt. Der erste Anschluss 21 der Spule 20 ist über ein starres, leitfähiges Verbindungselement 61 mit dem ersten Abschnitt 51a des Hohlrohrs 51 verbunden. Der erste Abschnitt 51a ist entweder ebenfalls aus einem elektrisch leitenden Material hergestellt oder es besteht eine elektrisch leitende Verbindung von dem Kontaktpunkt zwischen dem Verbindungselement 61 und dem ersten Abschnitt 51a zu dem Kontaktpunkt zwischen dem ersten Abschnitt 51a und der ersten Membran 41, welche in oder an dem Hohlrohr 51 in dem ersten Abschnitt 51a angeordnet sein kann. Der erste Anschluss 21 ist somit elektrisch leitend mit der ersten Membran 41 verbunden. Die erste Membran 41 wiederum ist an ihrem Außenumfang, mit welchem sie in der starren Membranhalterung 43 befestigt ist, über eine beliebig geartete Verbindungsleitung mit einem ersten Pol einer Stromversorgung kontaktiert.

Der zweite Anschluss 22 ist über ein starres Verbindungselement 62 mit dem zweiten Abschnitt 51b des Hohlrohrs 51 in elektrisch leitender Verbindung kontaktiert. Auch in diesem Fall ist entweder der zweite Abschnitt 51b des Hohlrohrs 51 aus einem elektrisch leitfähigen Material oder in oder an ihm ist eine elektrisch leitende Verbindung zwischen der Kontaktstelle des Verbindungselements 62 und dem zweiten Abschnitt 51b sowie der Kontaktstelle zwischen dem zweiten Abschnitt 51b und der zweiten Membran 42 ausgebildet. Ist die zweite Membran 42 über eine beliebig geartete Verbindungsleitung mit dem zweiten Pol der Stromversorgung kontaktiert, besteht somit eine elektrisch leitende Verbindung zwischen dem zweiten Anschluss 22 der Spule 20 und der Stromversorgung. Die Anschlussverbindungen zwischen den Anschlüssen 21, 22 der Spule 20 und einer Stromversorgung werden somit über die Verbindungselemente 61, 62, den ersten Abschnitt 51a oder den zweiten Abschnitt 51b des Hohlrohrs 51, die Membranen 41, 42 und die Verbindungsleitungen zwischen den Membranen 41, 42 und den Polen der Stromversorgung gebildet.

Fließt durch die Spule 20 ein Strom, wirkt auf die Spule eine Kraft, die diese, je nach Richtung des Stromes, in den Luftspalt 35 des Erregersystems 30 hineinzuziehen oder herauszutreiben versucht, so dass sich eine lineare Bewegung der Spule 20 in dem Erregersystem 30 ergibt. Bei einer derartigen Bewegung der Spule 20 wird ebenfalls das Hohlrohr 51 mitbewegt. Dadurch beulen sich die erste und zweite Membran 41, 42 je nach Bewegung der Spule 20 in Figur 3 nach oben oder nach unten aus, während sie in den Membranhalterungen 43, 44 an ihrem Außenrand in fester Position gehalten werden. Dabei sind die Membranen 41, 42 jedoch die einzigen Bauteile des Tauchspulensystems 10 und insbesondere der Anschlussverbindungen zwischen der Spule 20 und der zugehörigen Stromversorgung, die bei einer Bewegung der Spule 20 unterschiedlichen Biegewechselbelastungen ausgesetzt sind. Die Membranen 41, 42 sind besonders geeignet, derartige Biegebelastungen ausgesetzt zu werden, wobei keine Gefahr besteht, dass die Membranen 41, 42 ermüden. Das Tauchspulensystem 10 ist somit zuverlässig gegen Totalausfälle, welche durch Kabelbrüche entstehen können, geschützt und weist eine deutlich größere Lebensdauer auf.

Vorzugsweise wird ein derartiges Tauchspulensystem 10 eingesetzt, um ein optisches System exakt zu positionieren. Dazu ist in dem Hohlrohr 51 ein optisches System, beispielsweise eine Linse entweder in dem ersten Abschnitt 51 a oder dem zweiten Abschnitt 51 b angeordnet, welche bei Bewegung der Spule 20 in dem Erregersystem 30 relativ zu dem feststehenden Gehäuse linear in Abhängigkeit von dem durch die Spule 20 fließenden Strom positioniert werden kann. Einerseits ist somit eine hohe Positionsgenauigkeit gewährleistet, andererseits stellt die Ausbildung der Verbindungsanschlüsse zwischen der Spule und der Stromversorgung durch die Membranen 41, 42 sicher, dass keine Totalausfälle des Tauchspulensystems 10 auf Grund von Kabelbrüchen auftreten können. Die Positionierung von optischen Systemen mittels des Tauchspulensystems 10 ist vorzugsweise in Kameras oder Laserscannern verwendbar, um den Fokus des optischen Systems, insbesondere einer Linse exakt einstellen zu können.

### Bezugszeichenliste

- 10: Tauchspulensystem

- 20: Spule
- 21: erster Anschluss
- 22: zweiter Anschluss
- 25: Wicklung

- 30: Erregersystem
- 31: Magnet
- 32: Trägerelement
- 35: Luftspalt

- 41: erste Membran
- 42: zweite Membran
- 43: Membranhalterung
- 44: Membranhalterung

- 50: Halterung
- 51: Hohlrohr
- 51a: erster Abschnitt
- 51b: zweiter Abschnitt
- 55: Isolation

- 61: Verbindungselement
- 62: Verbindungselement

## Patentansprüche

1. Tauchspulensystem (10) mit einer in einem Erregersystem (30) beweglichen Spule (20) mit zwei Anschlüssen (21, 22), welche über Anschlussverbindungen mit einer Stromversorgung verbunden sind, wobei die Spule (20) mittels wenigstens einer ersten Membran (41) und einer zweiten Membran (42) gelagert ist, wobei die erste Membran (41) und die zweite Membran (42) elektrisch leitfähig und gegeneinander isoliert ausgebildet sind und zumindest einen Teil der elektrischen Anschlussverbindungen der Spule (20) bilden.

2. Tauchspulensystem nach Anspruch 1,
**dadurch gekennzeichnet, dass** der erste Anschluss (21) der Spule (20) mit der ersten Membran (41) und der zweite Anschluss (22) der Spule (20) mit der zweiten Membran (42) verbunden ist.

3. Tauchspulensystem nach einem der vorhergehenden Ansprüche,
**dadurch gekennzeichnet, dass** die Spule (20) linear in dem Erregersystem bewegbar (30) ist.

4. Tauchspulensystem nach einem der vorhergehenden Ansprüche,
**dadurch gekennzeichnet, dass** das Erregersystem (30) ein Magnetsystem ist.

5. Tauchspulensystem nach einem der vorhergehenden Ansprüche,
**dadurch gekennzeichnet, dass** die Membrane (41, 42) axial von einer Halterung (50) für die Spule (20) durchsetzt werden.

6. Tauchspulensystem nach einem der vorhergehenden Ansprüche,
**dadurch gekennzeichnet, dass** die Halterung (50) aus einem Hohlrohr (51) gebildet ist.

7. Tauchspulensystem nach einem der vorhergehenden Ansprüche,
**dadurch gekennzeichnet, dass** in dem Hohlrohr (51) ein optisches System angeordnet ist.

8. Verwendung des Tauchspulensystems (10) nach einem der vorhergehenden Ansprüche zur Halterung eines optischen Systems, insbesondere eines Objektivs.

9. Verwendung des Tauchspulensystems (10) nach einem der vorhergehenden Ansprüche zur Halterung eines Objektivs in einem Laserscanner.
